(19) Europäisches Patentamt / European Patent Office / Office européen des brevets

(11) **EP 4 264 752 B1**

(12) **FASCICULE DE BREVET EUROPEEN**

(45) Date de publication et mention
de la délivrance du brevet:
**09.10.2024   Bulletin 2024/41**

(21) Numéro de dépôt: **21839957.4**

(22) Date de dépôt: **16.12.2021**

(51) Classification Internationale des Brevets (IPC):
*H01S 3/00* (2006.01)      *H01S 3/042* (2006.01)
*H01S 3/06* (2006.01)      *H01S 3/08* (2023.01)
*H01S 3/081* (2006.01)      *H01S 3/23* (2006.01)

(52) Classification Coopérative des Brevets (CPC):
**H01S 3/0606; H01S 3/2325; H01S 3/2341;**
H01S 3/005; H01S 3/0064; H01S 3/0621;
H01S 3/0623; H01S 2301/02

(86) Numéro de dépôt international:
**PCT/EP2021/086116**

(87) Numéro de publication internationale:
**WO 2022/129293 (23.06.2022 Gazette 2022/25)**

(54) **DISPOSITIF D'AMPLIFICATION D'UN FAISCEAU LASER**

VORRICHTUNG ZUR VERSTÄRKUNG EINES LASERSTRAHLS

DEVICE FOR AMPLIFYING A LASER BEAM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:   **17.12.2020   FR 2013475**

(43) Date de publication de la demande:
**25.10.2023   Bulletin 2023/43**

(73) Titulaire: **THALES**
**92400 Courbevoie (FR)**

(72) Inventeurs:
  • **LAUX, Sébastien**
    **78995 Elancourt Cedex (FR)**
  • **PELLEGRINA, Alain**
    **78995 Elancourt Cedex (FR)**
  • **RICAUD, Sandrine**
    **78995 Elancourt Cedex (FR)**
  • **CASAGRANDE, Olivier**
    **78995 Elancourt Cedex (FR)**
  • **CHARBONNEAU, Mathilde**
    **78995 Elancourt Cedex (FR)**

(74) Mandataire: **Lavoix**
**2, place d'Estienne d'Orves**
**75441 Paris Cedex 09 (FR)**

(56) Documents cités:
**EP-A2- 2 915 226      EP-B1- 2 915 226**
**US-B1- 6 834 064**

  • **NEGEL JAN-PHILIPP ET AL: "Thin-disk
    multipass amplifier for fs pulses delivering 400
    W of average and 2.0 GW of peak power for linear
    polarization as well as 235 W and 1.2 GW for radial
    polarization", APPLIED PHYSICS B: LASERS
    AND OPTICS, SPRINGER INTERNATIONAL,
    BERLIN, DE, vol. 123, no. 5, 26 April 2017
    (2017-04-26), pages 1 - 8, XP036246808, ISSN:
    0946-2171, [retrieved on 20170426], DOI:
    10.1007/S00340-017-6739-2**

**Description**

La présente invention concerne un dispositif d'amplification d'un faisceau laser multi-longueurs d'onde.

Le domaine de l'invention est celui des sources laser à état solide pour applications scientifiques, industrielles, médicales et militaires. Plus spécifiquement, elle est utilisée de façon avantageuse pour des matériaux de milieu amplificateur (tel qu'un cristal) qui ont une relativement faible épaisseur comparée à leur ouverture selon l'axe de propagation du faisceau laser, typiquement inférieure à 1:3.

La technologie des lasers de pompage a sensiblement évolué ces dernières années et il devient désormais possible de disposer d'une source laser impulsionnel qui donne une puissance moyenne de pompage de l'ordre de la centaine de Watt.

Cependant, un certain nombre de configurations ne sont pas compatibles avec les lasers de pompage de nouvelle génération pour lesquelles une haute énergie et une forte puissance moyenne (plus haut taux de répétition) sont recherchées.

Dans l'état de l'art actuel, différentes solutions sont utilisées pour l'extraction de l'énergie thermique dans un milieu amplificateur en travaillant sur le facteur de forme du milieu amplificateur, typiquement des fibres amplificatrices, des disques très minces, des slab et des disques dit épais.

La solution de disque épais est bien adaptée à certains milieux amplificateurs tels que les matériaux amorphes (comme les verres), les céramiques transparentes ou les cristaux comme le Ti:Sa (abréviation pour Titane:Saphir). Elle permet à la fois d'accéder à des niveaux d'énergie élevés, des puissances moyennes élevées, et à des durées d'impulsions courtes grâce au large spectre d'amplification du matériau.

Dans la technologie de disque épais, le milieu amplificateur (par exemple un cristal) est refroidi par sa face arrière. Le refroidissement est alors obtenu au moyen d'un fluide, liquide ou gaz, ou d'un solide. Un tel refroidissement par la face arrière permet d'augmenter la surface d'échange thermique. Il permet par ailleurs de générer un gradient thermique dans la direction de propagation du laser dans le cristal, et également d'atteindre une extraction thermique élevée. Les variations d'indice liées aux variations de température dans le cristal sont des gradients majoritairement orientés dans la même direction que la direction de propagation du faisceau laser.

Toutefois, les dispositifs d'amplification laser à refroidissement par la face arrière induisent un repliement géométrique du faisceau du fait de la face arrière réfléchissante du cristal. La face de sortie du cristal est alors la même que la face d'entrée, ce qui implique que les impulsions parasites (dues aux réflexions parasites sur la face avant) se retrouvent avant l'impulsion principale, dégradant par conséquent le contraste temporel de l'impulsion. Le contraste temporel est défini par le rapport entre l'intensité de l'impulsion principale et le pied de l'impulsion et/ou des éventuelles impulsions parasites.

Pour éviter cette dégradation, il est connu du brevet EP 2 915 226 B, de modifier l'interface air/cristal pour séparer l'impulsion principale et les impulsions parasites. Pour cela, la face avant du milieu amplificateur est inclinée par rapport à sa face arrière d'un angle non nul. Ainsi, après propagation dans le milieu amplificateur, les réflexions parasites sont séparées spatialement de l'impulsion principale et le contraste temporel n'est plus dégradé par les réflexions parasites.

Pour les impulsions courtes (avec spectre large), cet angle produit un effet prismatique qui est compensé par un prisme de compensation positionné sur le trajet du faisceau, comme cela est décrit dans EP 2 915 226 B. Ainsi, lorsque plusieurs passages dans le milieu d'amplification sont effectués, cela implique la mise en oeuvre de plusieurs prismes dans le système d'amplification.

Au-delà de l'impact financier, la mise en oeuvre de nombreuses optiques en transmission est une source de perte optiques et une source potentielle de panne (endommagement conduisant à l'indisponibilité du laser et à un coût de réparation de la pièce et de la main d'oeuvre pour le réalignement).

Il existe donc un besoin pour un dispositif d'amplification permettant de minimiser les pertes optiques tout en restant satisfaisant en termes de refroidissement et de contraste temporel.

A cet effet l'invention a pour objet un dispositif d'amplification d'un faisceau laser multi-longueurs d'onde, le dispositif comprenant :

a. un milieu amplificateur solide ayant au moins deux faces planes parmi : une face avant propre à recevoir le faisceau à amplifier à chaque passage dudit faisceau dans le milieu amplificateur, et une face arrière réfléchissante, la face avant étant inclinée par rapport à la face arrière d'une inclinaison non nulle, la face arrière étant propre à être refroidie, le faisceau reçu sur la face avant lors du premier passage étant appelé faisceau incident, le faisceau réfléchi par la face arrière et réfracté par la face avant lors du n-ième passage étant appelé n-ième faisceau utile, et

b. une première unité optique de renvoi disposée sur le trajet du premier faisceau utile, la première unité optique de renvoi étant configurée de sorte à renvoyer le premier faisceau utile sur la face avant pour un deuxième passage dans le milieu amplificateur de sorte que les sous-faisceaux de chaque longueur d'onde, formant le deuxième faisceau utile, soient parallèles entre eux à l'issue du deuxième passage.

Selon d'autres aspects avantageux de l'invention, le dispositif comprend une ou plusieurs des caractéristiques suivantes, prises isolément ou suivant toutes les combinaisons techniquement possibles :

- la première unité optique de renvoi est configurée de sorte que le deuxième faisceau utile est équivalent en termes de dispersion spatiale chromatique au faisceau qui aurait été obtenu en sortie d'une lame à faces planes et parallèles à partir d'un faisceau incident arrivant sur la face avant de ladite lame avec un angle d'incidence égal à l'angle d'incidence du faisceau incident sur le milieu amplificateur ;
- le milieu amplificateur est un disque dont les faces planes sont la face avant et la face arrière, lesdites faces étant inscrites dans un prisme droit à base triangulaire ou trapézoïdale, dite base, la première unité optique de renvoi comprenant deux miroirs orientés de sorte que le trajet du premier faisceau utile entre le milieu amplificateur et le premier miroir soit symétrique, par rapport à un plan de symétrie, au trajet du premier faisceau utile entre le deuxième miroir et le milieu amplificateur, le plan de symétrie étant un plan perpendiculaire, d'une part, à un plan contenant la base du milieu amplificateur et, d'autre part, à un plan contenant la face arrière ;
- la face avant du milieu amplificateur est propre à recevoir le faisceau incident et à réfléchir un faisceau, dit premier faisceau parasite, à partir du faisceau incident, la première unité optique de renvoi étant disposée en dehors du trajet du premier faisceau parasite ;
- le deuxième faisceau utile présente un diamètre élargi par rapport au diamètre du faisceau incident, le dispositif d'amplification comprenant une deuxième unité optique de renvoi propre à renvoyer le deuxième faisceau utile dans le milieu amplificateur pour au moins un troisième, puis un quatrième passage de sorte que le dernier faisceau utile en sortie du milieu amplificateur, dit faisceau de sortie, ait un diamètre sensiblement égal au diamètre du faisceau incident et que les sous-faisceaux de chaque longueur d'onde, formant ledit faisceau de sortie, soient parallèles entre eux ;
- la deuxième unité optique de renvoi est configurée de sorte que le faisceau de sortie est équivalent en termes de diamètre et de dispersion spatiale chromatique au faisceau qui aurait été obtenu suite au passage successif d'un faisceau incident dans une première, puis une deuxième lame à faces planes et parallèles, la première lame étant orientée de sorte que le faisceau incident arrive sur la face avant de la première lame avec un premier angle d'incidence égal à l'angle incidence du faisceau incident sur le milieu amplificateur, la deuxième lame étant orientée de sorte à recevoir le faisceau en sortie de la première lame avec un deuxième angle d'incidence égal à l'opposé du premier angle d'incidence ;
- la deuxième unité optique de renvoi est propre à renvoyer le deuxième faisceau utile dans le milieu amplificateur de sorte que le nombre total de passages du faisceau à amplifier dans le milieu amplificateur soit un multiple de quatre ;
- la deuxième unité optique de renvoi est propre à renvoyer le deuxième faisceau utile dans le milieu amplificateur de sorte que le nombre total de passages du faisceau à amplifier dans le milieu amplificateur soit un multiple de deux et que le faisceau à amplifier effectue un trajet aller et un trajet retour, superposé au trajet aller, entre la première entrée dudit faisceau dans le milieu amplificateur et la dernière sortie dudit faisceau du milieu amplificateur ;
- à chaque passage dans le milieu amplificateur, il est obtenu un faisceau parasite directement réfléchi sur la face avant du milieu amplificateur, la première unité de renvoi et la deuxième unité de renvoi étant disposées en dehors du trajet de chaque faisceau parasite résultant d'un passage impair du faisceau à amplifier dans le milieu amplificateur ;
- le dernier faisceau utile en sortie du milieu amplificateur est dit faisceau de sortie le faisceau incident et le faisceau de sortie étant décalés spatialement.

D'autres caractéristiques et avantages de l'invention apparaîtront à la lecture de la description qui suit de modes de réalisation de l'invention, donnée à titre d'exemple uniquement, et en référence aux dessins qui sont :

- [Fig 1] figure 1, une représentation schématique vue de dessus d'un dispositif d'amplification selon un premier mode de réalisation,
- [Fig 2] figure 2, une représentation schématique d'un système optique équivalent en termes de dispersion spatiale chromatique au dispositif d'amplification du premier mode de réalisation,
- [Fig 3] figure 3, une représentation schématique vue de dessus d'un premier exemple d'un dispositif d'amplification selon un deuxième mode de réalisation, le faisceau d'entrée et le faisceau de sortie du dispositif d'amplification étant superposés dans ce premier exemple et la propagation étant réalisée dans un même plan,
- [Fig 4] figure 4, une représentation schématique vue en perspective d'un deuxième exemple d'un dispositif d'amplification selon le deuxième mode de réalisation, le faisceau d'entrée et le faisceau de sortie du dispositif d'amplification étant décalés dans l'espace dans ce deuxième exemple, et
- [Fig 5] figure 5, une représentation schématique d'un système optique équivalent en termes de dispersion spatiale chromatique et de dispersion latérale chromatique au dispositif d'amplification du deuxième mode de réalisation.

Dans la suite de la description, il est défini une direction de propagation z représentée sur les figures par un axe z et correspondant à la direction de propagation du faisceau laser. Il est, en outre, défini une première direction transversale, perpendiculaire à la direction de propagation, et représentée sur les figures par un axe x, tel que le plan (xOz) correspond à une vue de dessus du dispositif d'amplification 10. Il est, également, défini une deuxième direction transversale y, perpendiculaire à la direction de propagation z et à la première direction transversale x. La deuxième direction transversale y est représentée sur les figures par un axe y et est telle que le plan (yOz) correspond à une vue de côté du dispositif d'amplification 10. L'homme du métier comprendra que les notations utilisées pour de tels axes sont arbitraires, et pourraient être remplacées par d'autres notations.

Dans la suite de la description, il est entendu par le terme « dispersion spatiale chromatique », la dispersion angulaire d'un faisceau due aux variations de l'angle de déviation en fonction des longueurs d'onde dans un dioptre. Il est entendu par le terme « dispersion latérale chromatique », l'élargissement du diamètre d'un faisceau en fonction des longueurs d'onde (décalage des pupilles) suite au passage dans deux dioptres dont les interfaces sont parallèles (lames à faces parallèles).

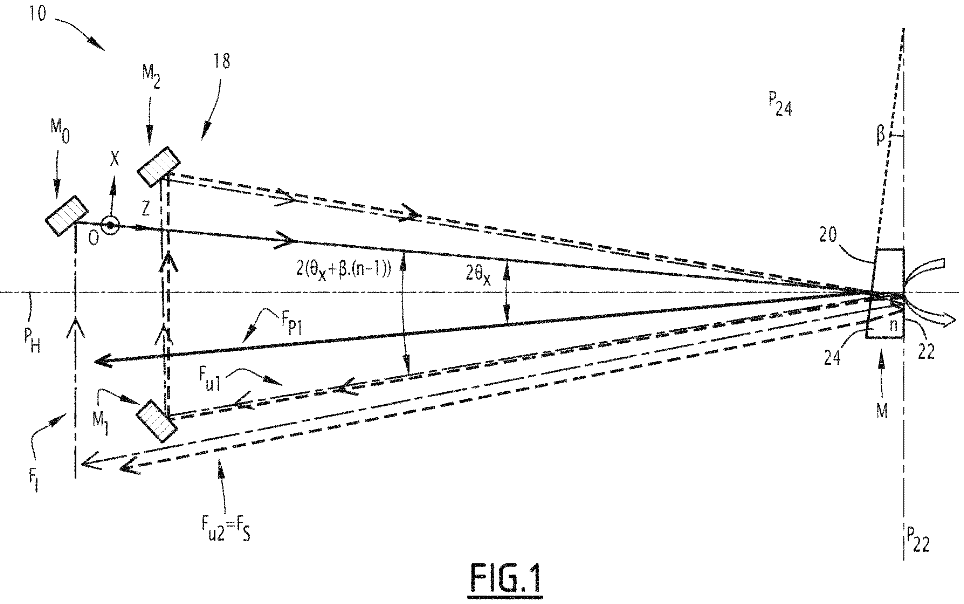

Un premier mode de réalisation d'un dispositif d'amplification 10 est illustré par la figure 1.

Le dispositif d'amplification 10 est configuré pour amplifier un faisceau laser, notamment un faisceau laser impulsionnel multi-longueurs d'onde. Le faisceau à amplifier est, par exemple, un faisceau infrarouge.

Le faisceau à amplifier a, par exemple, une puissance moyenne supérieure à 10 Watts (W).

Le dispositif d'amplification 10 selon le premier mode de réalisation comprend un milieu amplificateur M et une première unité optique de renvoi 18.

Le milieu M est un milieu solide. Le milieu M est, par exemple, un cristal tel que du saphir dopé au Titane, ou Yb :YAG, Yb :CaF2 ou un polymère, une céramique ou un verre ou tout autre matériau à l'état solide.

Le milieu M a un indice de réfraction n. De préférence, la relation suivante est vérifiée :

$$n \gg \frac{(n-1)}{\nu}$$

Où v est la constringence du milieu amplificateur M. Cela vise à préserver le caractère multi-longueurs d'onde du faisceau $F_S$ en sortie du dispositif d'amplification 10.

Le milieu M a au moins deux faces planes parmi une face avant 20 propre à recevoir le faisceau à amplifier à chaque passage dudit faisceau dans le milieu amplificateur M et une face arrière 22 réfléchissante.

La face avant 20 est inclinée par rapport à la face arrière 22 d'une inclinaison $\beta$ (angle) non nulle. Dans ce qui suit, $\beta'$ désigne la projection de l'inclinaison $\beta$ sur le plan (xOz) et $\beta''$ la projection de l'inclinaison $\beta$ sur le plan (yOz). Dans un exemple de mise en oeuvre, le milieu amplificateur M est un disque dont les faces (avant 20 et arrière 22) sont inscrites dans un prisme droit à base triangulaire ou trapézoïdale, dite base 24. La base 24 du prisme, et donc l'inclinaison $\beta$, est entièrement contenue dans un plan perpendiculaire à, d'une part, un plan $P_{22}$ contenant la face arrière 22, et d'autre part, à un plan perpendiculaire au plan (yOz).

La face avant 20 du milieu amplificateur M est propre à recevoir le faisceau à amplifier à chaque passage dudit faisceau dans le milieu amplificateur M et à, d'une part, réfléchir un faisceau parasite (réflexion directe) et à, d'autre part, réfracter un faisceau utile après qu'un tel faisceau ait été réfléchi par la face arrière 22. Le faisceau reçu sur la face avant 20 lors du premier passage est appelé faisceau incident $F_I$. Le faisceau réfléchi par la face arrière 22 et réfracté par la face avant 20 lors du n-ième passage est appelé n-ième faisceau utile $F_{Un}$. Le faisceau utile en sortie du milieu amplificateur M lors du dernier passage est aussi appelé faisceau de sortie $F_S$. Le faisceau directement réfléchi par la face avant 20 à partir du faisceau à amplifier lors du n-ième passage est appelé n-ième faisceau parasite $F_{Pn}$.

Avantageusement, la face avant 20 est traitée anti-reflet.

La face arrière 22 du milieu amplificateur M est propre à réfléchir, à chaque passage, le faisceau à amplifier, après son passage par la face avant 20 du milieu amplificateur M, pour former le faisceau utile correspondant.

La face arrière 22 est propre à être refroidie par un dispositif de refroidissement, qui est, par exemple, compris dans le dispositif d'amplification 10. Le refroidissement est représenté sur la figure 1 par une flèche accolée à la face arrière 22.

La première unité optique de renvoi 18 est disposée sur le trajet du premier faisceau utile $F_{U1}$. La première unité optique de renvoi 18 est configurée de sorte à renvoyer le premier faisceau utile $F_{U1}$ sur la face avant 20 pour un deuxième passage dans le milieu amplificateur M de sorte que les sous-faisceaux de chaque longueur d'onde, formant le deuxième faisceau utile $F_{U2}$, soient parallèles entre eux à l'issue du deuxième passage. Sur la figure 1, seuls deux sous-faisceaux sont représentés pour ne pas surcharger la figure. La première unité optique de renvoi 18 permet, ainsi, de compenser la dispersion spatiale chromatique induite par l'effet prismatique résultant de l'inclinaison $\beta$ entre la face avant 20 et la face arrière 22 du milieu amplificateur M.

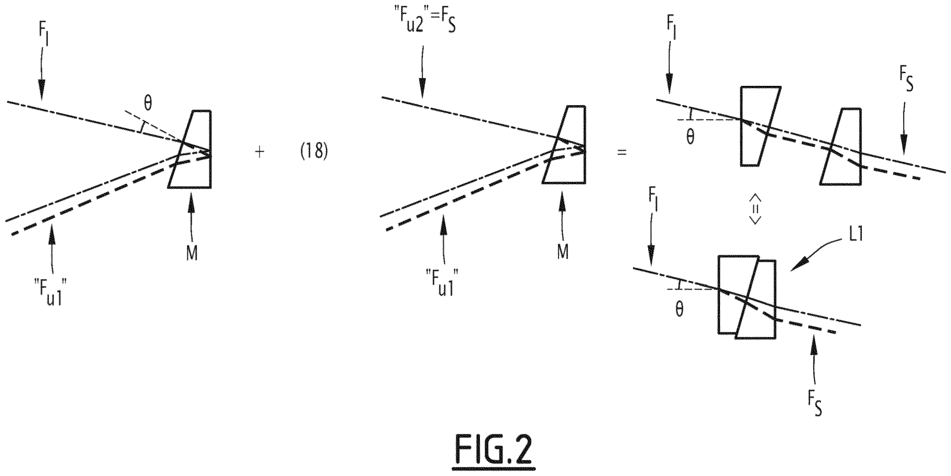

Avantageusement, comme illustré par la figure 2, la première unité optique de renvoi 18 est configurée de sorte que le deuxième faisceau utile $F_{U2}$ est équivalent en termes de dispersion spatiale chromatique au faisceau qui aurait été obtenu en sortie d'une lame à faces planes et parallèles L1 à partir d'un faisceau incident arrivant sur la face avant de ladite lame avec un angle d'incidence égal à l'angle d'incidence $\Theta$ du faisceau incident $F_I$ sur le milieu amplificateur M.

Dans l'exemple illustré par la figure 1, la première unité optique de renvoi 18 comprend deux miroirs M1, M2 orientés de sorte que le trajet du premier faisceau utile $F_{U1}$ entre le milieu amplificateur M et le premier miroir M1 soit symétrique, par rapport à un plan de symétrie $P_H$, au trajet du premier faisceau utile $F_{U1}$ entre le deuxième miroir M2 et le milieu amplificateur M. Le plan de symétrie $P_H$ est un plan perpendiculaire, d'une part, à un plan $P_{24}$ contenant la base 24 du milieu amplificateur M et, d'autre part, à un plan $P_{22}$ contenant la face arrière 22.

Ainsi, après une première réflexion sur le miroir M1 et une deuxième réflexion sur le miroir M2, l'image du faisceau à amplifier est retournée en arrivant sur la face avant 20 du milieu amplificateur M. Le milieu amplificateur M lui-même joue alors le rôle du prisme de compensation de l'état de la technique. Dans la configuration particulière de la figure 1, le plan de symétrie $P_H$ est un plan perpendiculaire au plan (xOz) (plan de la feuille sur la figure 1) et perpendiculaire à un plan $P_{22}$ contenant la face arrière 22, et l'image est retournée dans la direction x.

Avantageusement, la première unité optique de renvoi 18 ne comprend pas de prisme.

Avantageusement, la première unité optique de renvoi 18 est disposée en dehors du trajet du premier faisceau parasite $F_{P1}$.

Le fonctionnement du dispositif d'amplification 10 selon le premier mode de réalisation va maintenant être décrit.

Initialement, le faisceau (l'impulsion) à amplifier $F_I$ de diamètre $\Phi$ arrive sur la face avant 20 du milieu amplificateur M avec un angle d'incidence $\Theta$ qui se décompose en un angle $\Theta_x$ dans le plan (xOz) et un angle $\Theta_y$ dans le plan (yOz).

Le faisceau utile (impulsion principale) est réfléchi par la face arrière 22, le faisceau parasite $F_{P1}$ par la face avant 20. Le faisceau parasite aussi désigné impulsions parasites, est défléchi sur cette face avant 20 d'un angle $2\Theta_x$ dans le plan (xOz) et $2\Theta_y$ dans le plan (yOz). Le faisceau utile est défléchi en sortie d'un angle $2(\Theta_x + \beta'.(n-1)) = 2(\Theta_x + \beta.(n-1))$ dans le plan (xOz) et d'un angle $2(\Theta_y + \beta''.(n-1)) = 2\Theta y$ dans le plan (yOz).

Comme il s'agit d'une source laser multi-longueurs d'onde, l'angle $\beta$ que forme les faces 20 et 22 produit un effet prismatique. Ainsi, après le premier passage dans le milieu amplificateur M, les longueurs d'onde du premier faisceau utile $F_{U1}$ sont séparées angulairement.

La première unité optique de renvoi 18 disposée après la séparation du premier faisceau utile $F_{u1}$ et du premier faisceau parasite $F_{P1}$, sur le trajet du premier faisceau utile $F_{U1}$ permet de corriger la dispersion spatiale chromatique.

En particulier, dans l'exemple particulier de la figure 1, $\Theta_y = 0$, $\beta' = \beta$ et $\beta'' = 0$, ce qui fait que toute la propagation se passe dans le plan (xOz).

Il est à noter qu'en sortie du milieu amplificateur M, les composantes spectrales du deuxième faisceau utile $F_{u2}$ forment une tache de diamètre $\Phi + \Delta\Phi$. On notera que $\Delta\Phi$ inclut l'augmentation du diamètre introduite par la divergence du faisceau lors du premier passage dans le milieu amplificateur M, puis celle introduite par la divergence du faisceau entre sa sortie du milieu amplificateur M et sa deuxième entrée dans le milieu amplificateur M. On retrouve le même diamètre $\Phi + \Delta\Phi$ après le deuxième passage dans le milieu amplificateur M. Pour préserver le caractère multi-longueurs d'onde du faisceau de sortie, l'élargissement $\Delta\Phi$ du diamètre du deuxième faisceau utile $F_{u2}$ doit être petit devant $\Phi$.

Cela est le cas lorsque $n \gg \dfrac{n-1}{\nu}$.

En effet,

$$\Delta\Phi = L.\tan(2.\beta.\Delta n) = L.\tan\left(2.\beta.\frac{1}{\nu}.(n-1)\right)$$

or, $(2\Theta_x + \beta.n)) \gg 2.\beta.\dfrac{1}{\nu}.(n-1)$ lorsque $n \gg \dfrac{n-1}{\nu}$, ce qui implique que $\Delta\Phi \ll \Phi$.

Ainsi, le dispositif d'amplification 10 selon le premier mode de réalisation permet de compenser la dispersion spatiale chromatique induite par l'inclinaison $\beta$ du milieu amplificateur M sans toutefois introduire de pertes additionnelles. Au contraire, la compensation est réalisée par un passage additionnel dans le milieu amplificateur M lui-même qui n'introduit pas de pertes, mais au contraire plus de gain.

Le dispositif d'amplification 10 selon le premier mode de réalisation permet donc de minimiser les pertes optiques tout en restant satisfaisant en termes de refroidissement, de gain et de contraste temporel.

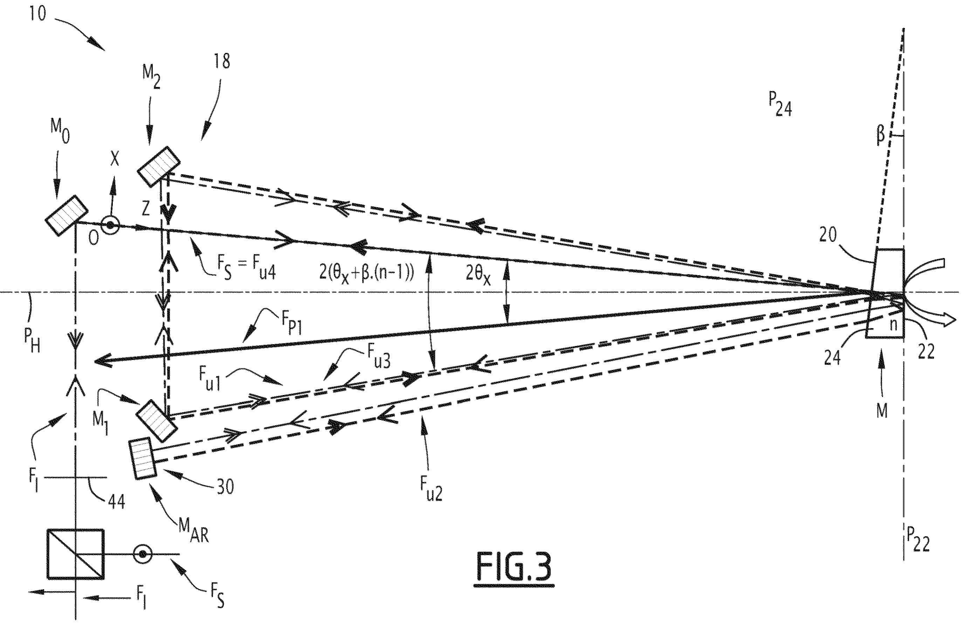

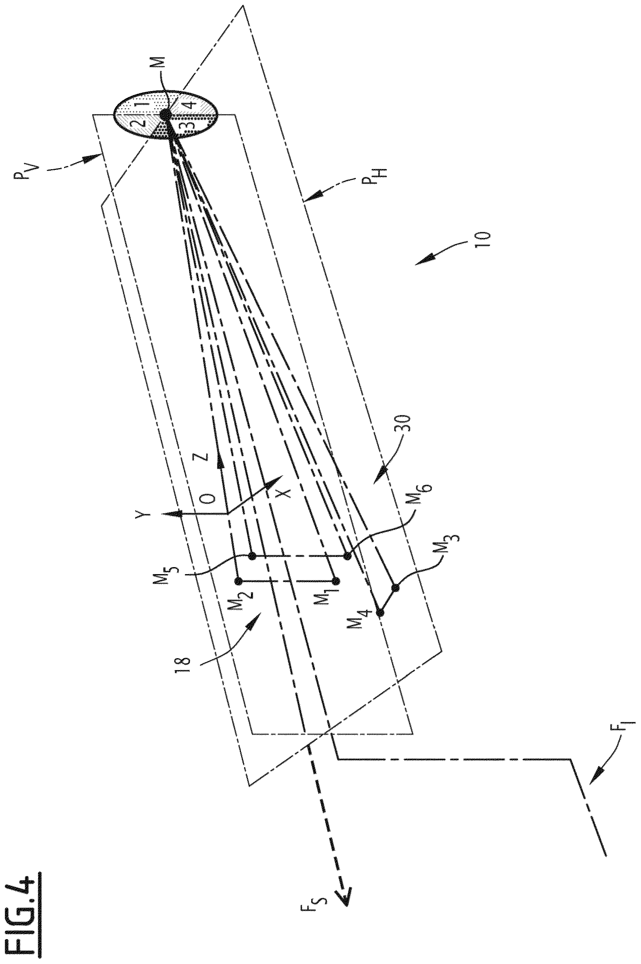

Selon un deuxième mode de réalisation tel que visible sur les figures 3 et 4, les éléments identiques au dispositif d'amplification 10 selon le premier mode de réalisation décrit en regard de la figure 1 ne sont pas répétés. Seules les différences sont mises en évidence.

Dans le deuxième mode de réalisation, outre les éléments du premier dispositif d'amplification 10, le dispositif d'amplification 10 comprend une deuxième unité optique de renvoi 30 propre à renvoyer le deuxième faisceau utile $F_{U2}$ dans le milieu amplificateur M pour au moins un troisième, puis un quatrième passage de sorte que le dernier faisceau utile en sortie du milieu amplificateur M, dit faisceau de sortie $F_S$, ait un diamètre sensiblement égal au diamètre $\Phi$ du faisceau incident $F_I$ et que les sous-faisceaux de chaque longueur d'onde, formant ledit faisceau de sortie $F_S$, soient parallèles entre eux. Ainsi, l'ensemble optique formé par la première unité optique de renvoi 18 et la deuxième unité optique de renvoi 30 permet de compenser à la fois la dispersion spatiale chromatique et la dispersion latérale chromatique.

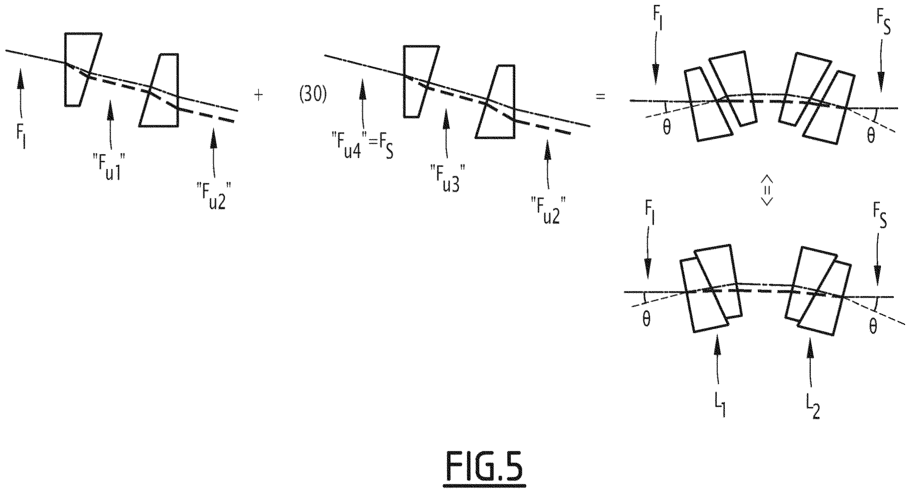

Avantageusement, comme illustré sur la figure 5, la deuxième unité optique de renvoi 30 est configurée de sorte que le faisceau de sortie $F_S$ est équivalent en termes de diamètre (dispersion latérale chromatique) et de dispersion spatiale chromatique au faisceau qui aurait été obtenu suite au passage successif d'un faisceau incident dans une première, puis une deuxième lame à faces planes et parallèles L1 et L2, la première lame L1 étant orientée de sorte que le faisceau incident arrive sur la face avant de la première lame avec un premier angle d'incidence $\Theta_1$ égal à l'angle incidence $\Theta$ du faisceau incident sur le milieu amplificateur M, la deuxième lame L2 étant orientée de sorte à recevoir le faisceau en sortie de la première lame L1 avec un deuxième angle d'incidence $\Theta_2$ égal à l'opposé du premier angle d'incidence $\Theta_1$.

Avantageusement, la deuxième unité optique de renvoi 30 est propre à renvoyer le deuxième faisceau utile $F_{U2}$ dans le milieu amplificateur M de sorte que le nombre total de passages du faisceau à amplifier dans le milieu amplificateur M soit un multiple de quatre.

En complément ou en variante, la deuxième unité optique de renvoi est propre à renvoyer le deuxième faisceau utile $F_{U2}$ dans le milieu amplificateur M de sorte que le nombre total de passages du faisceau à amplifier dans le milieu amplificateur M soit un multiple de deux et que le faisceau à amplifier effectue un trajet aller et un trajet retour, superposé au trajet aller, entre la première entrée dudit faisceau dans le milieu amplificateur M et la dernière sortie dudit faisceau du milieu amplificateur M. Selon le principe de retour inverse de la lumière, cela permet de compenser la dispersion latérale chromatique du faisceau $F_S$ en sortie du dispositif d'amplification 10.

Dans les exemples des figures 3 et 4, le faisceau à amplifier effectue quatre passages dans le milieu amplificateur M.

Plus précisément, dans l'exemple de la figure 3, la deuxième unité optique de renvoi 30 comprend un miroir $M_{AR}$ (miroir plan) propre à faire effectuer au faisceau à amplifier un aller-retour dans le dispositif d'amplification 10. Comme le faisceau à amplifier effectue déjà deux passages via la première unité optique 18, le nombre total de passages dans le milieu amplificateur M est de quatre.

Dans l'exemple illustré par la figure 4, la deuxième unité optique de renvoi 30 comprend quatre miroirs M3, M4, M5 et M6. Les miroirs M3 et M4 sont propres à renvoyer le deuxième faisceau utile $F_{U2}$ dans le milieu amplificateur M pour un troisième passage dans le milieu amplificateur M. Les miroirs M5 et M6 sont propres à renvoyer le troisième faisceau utile $F_{U3}$ dans le milieu amplificateur M pour un quatrième passage dans le milieu amplificateur M. Le nombre total de passages dans le milieu amplificateur M est, ainsi, de quatre. En particulier, dans cet exemple, $P_H$ désigne un plan de symétrie horizontal pour les miroirs M1, M2 du dispositif d'amplification 10 et Pv un plan de symétrie vertical pour les miroirs M1, M2 par rapport aux miroirs M5, M6. Le faisceau à amplifier rentre par le cadran 1) du milieu M, le deuxième passage s'effectue par le cadran 2), le troisième passage par le cadran 3), et le quatrième passage par le cadran 4).

Avantageusement, la deuxième unité optique de renvoi 30 comprend au moins un miroir.

Avantageusement, la deuxième unité optique de renvoi 30 ne comprend pas de prisme.

Avantageusement, la première unité de renvoi 18 et la deuxième unité de renvoi 30 sont disposées en dehors du trajet de chaque faisceau parasite résultant d'un passage impair dans le milieu amplificateur M. Ainsi, dans les exemples des figures 3 et 4, le premier faisceau parasite $F_{P1}$ et le troisième faisceau parasite $F_{P3}$ ne sont pas renvoyés dans le milieu amplificateur M et sont, ainsi, éliminés.

Lorsque le faisceau incident $F_I$ et le faisceau de sortie $F_S$ sont superposés, le dispositif d'amplification 10 comprend, par exemple, un ensemble optique de séparation 40 pour séparer les deux faisceaux. Dans l'exemple illustré par la figure 3, l'ensemble optique de séparation 40 comprend un cube polariseur 42 et une lame quart d'onde 44, ainsi qu'un miroir M0.

De préférence, le faisceau incident $F_I$ et le faisceau de sortie $F_S$ sont décalés spatialement (non superposés). Une telle configuration est notamment illustrée en figure 4. Une telle configuration permet de s'affranchir d'un ensemble optique de séparation du faisceau incident $F_I$ et du faisceau de sortie $F_S$.

Lors du fonctionnement du dispositif d'amplification 10 selon le deuxième mode de réalisation, outre le fonctionnement décrit pour le premier mode de réalisation, le deuxième faisceau utile $F_{U2}$ est renvoyé, via la deuxième unité optique 30, sur la face avant 20 du milieu amplificateur M, pour un troisième passage dans ledit milieu M. Cela donne une troisième réflexion parasite $F_{P3}$ et un troisième faisceau utile $F_{U3}$. Le troisième faisceau utile $F_{U3}$ est à son tour renvoyé, via la deuxième unité optique 30, sur la face avant 20 du milieu amplificateur M, pour un quatrième passage dans ledit milieu M. Cela donne une quatrième réflexion parasite $F_{P4}$ et un quatrième faisceau utile $F_{U4}$. Il sera noté que sur la figure 2, par soucis de clarté, les réflexions parasites $F_{P2}$, $F_{P3}$ et $F_{P4}$ n'ont pas été représentées.

La configuration de la deuxième unité optique 30 par rapport à la première unité optique 18 et au milieu amplificateur M permet, ainsi, de compenser la dispersion latérale chromatique du faisceau amplifié de sortie du dispositif d'amplification 10.

En choisissant une disposition adaptée de la première unité de renvoi 18 et de la deuxième unité de renvoi 30, les faisceaux parasites générés lors de passages impairs dans le milieu amplificateur M (premier et troisième passage notamment) ne sont pas renvoyés dans le milieu amplificateur M et sont éjectés.

Les faisceaux parasites générés lors de passages pairs dans le milieu amplificateur M sont aussi facilement dissociables du faisceau utile. En effet, dans le cas d'un montage en deux dimensions (figure 3), les impulsions parasites générées lors de passages pairs empruntent le même chemin optique que les impulsions utiles mais sont en retard par rapport à l'impulsion principale. De telles impulsions vont, ainsi, être à l'origine d'un « post pulse » après le faisceau (impulsion) utile. Comme ces impulsions parasites arrivent après le faisceau utile, elles ne diminuent pas le contraste et il est aisé de les filtrer. Dans le cas d'un montage en trois dimensions (figure 4), les impulsions parasites générées lors de passages pairs empruntent le même chemin optique que les impulsions utiles mais en sens inverse, et ne viennent, ainsi, pas affecter le contraste.

Ainsi, le dispositif d'amplification 10 selon le deuxième mode de réalisation permet, outre les avantages du premier mode de réalisation, de compenser la dispersion latérale chromatique induite lors des deux premières traversées du milieu amplificateur M, et cela sans introduire de pertes additionnelles. Au contraire, la compensation est réalisée par des passages additionnels dans le milieu amplificateur M qui introduisent, ainsi, un gain d'amplification tout en restant satisfaisant en termes de refroidissement et de contraste temporel.

L'homme du métier comprendra que les exemples des figures 3 et 4 illustrent seulement quatre passages dans le milieu amplificateur M. Néanmoins, le deuxième mode de réalisation se généralise à un plus grand nombre de passages dans le milieu amplificateur M avec pour condition soit que ce nombre soit un multiple de quatre (un multiple de deux mais pas de quatre reviendrait seulement à compenser la dispersion spatiale chromatique mais pas la dispersion latérale chromatique), soit que ce nombre soit un multiple de deux mais que le faisceau à amplifier effectue un aller-retour dans le dispositif d'amplification 10.

L'homme du métier comprendra que les modes de réalisation et caractéristiques des exemples décrits précédemment sont susceptibles d'être combinés entre eux lorsqu'une telle combinaison est compatible.

## Revendications

1. Dispositif (10) d'amplification d'un faisceau laser multi-longueurs d'onde, le dispositif (10) comprenant :

   a. un milieu amplificateur (M) solide ayant au moins deux faces planes parmi : une face avant (20) propre à recevoir le faisceau à amplifier à chaque passage dudit faisceau dans le milieu amplificateur (M), et une face arrière (22) réfléchissante, la face avant (20) étant inclinée par rapport à la face arrière (22) d'une inclinaison ($\beta$) non nulle, la face arrière (22) étant propre à être refroidie, le faisceau reçu sur la face avant (20) lors du premier passage étant appelé faisceau incident ($F_I$), le faisceau réfléchi par la face arrière (22) et réfracté par la face avant (20) lors du n-ième passage étant appelé n-ième faisceau utile ($F_{Un}$), et

   b. une première unité optique de renvoi (18) disposée sur le trajet du premier faisceau utile ($F_{U1}$), la première unité optique de renvoi (18) étant configurée de sorte à renvoyer le premier faisceau utile ($F_{U1}$) sur la face avant (20) pour un deuxième passage dans le milieu amplificateur (M) de sorte que les sous-faisceaux de chaque longueur d'onde, formant le deuxième faisceau utile ($F_{U2}$), soient parallèles entre eux à l'issue du deuxième passage.

2. Dispositif d'amplification (10) selon la revendication 1, dans lequel la première unité optique de renvoi (18) est configurée de sorte que le deuxième faisceau utile ($F_{U2}$) est équivalent en termes de dispersion spatiale chromatique au faisceau qui aurait été obtenu en sortie d'une lame à faces planes et parallèles à partir d'un faisceau incident arrivant sur la face avant de ladite lame avec un angle d'incidence égal à l'angle d'incidence ($\Theta$) du faisceau incident ($F_I$) sur le milieu amplificateur (M).

3. Dispositif d'amplification (10) selon la revendication 1 ou 2, dans lequel le milieu amplificateur (M) est un disque dont les faces planes sont la face avant (20) et la face arrière (22), lesdites faces (20, 22) étant inscrites dans un prisme droit à base triangulaire ou trapézoïdale, dite base (24), la première unité optique de renvoi (18) comprenant deux miroirs (M1, M2) orientés de sorte que le trajet du premier faisceau utile ($F_{U1}$) entre le milieu amplificateur (M) et le premier miroir (M1) soit symétrique, par rapport à un plan de symétrie ($P_H$), au trajet du premier faisceau utile ($F_{U1}$) entre le deuxième miroir (M2) et le milieu amplificateur (M), le plan de symétrie ($P_H$) étant un plan perpendiculaire, d'une part, à un plan ($P_{24}$) contenant la base (24) du milieu amplificateur (M) et, d'autre part, à un plan ($P_{22}$) contenant la face arrière (22).

4. Dispositif d'amplification (10) selon l'une quelconque des revendications 1 à 3, dans lequel la face avant (20) du milieu amplificateur (M) est propre à recevoir le faisceau incident ($F_I$) et à réfléchir un faisceau, dit premier faisceau parasite ($F_{P1}$), à partir du faisceau incident ($F_I$), la première unité optique de renvoi (18) étant disposée en dehors du trajet du premier faisceau parasite ($F_{P1}$).

5. Dispositif d'amplification (10) selon l'une quelconque des revendications 1 à 4, dans lequel le deuxième faisceau utile ($F_{U2}$) présente un diamètre élargi ($\Phi + \Delta\Phi$) par rapport au diamètre ($\Phi$) du faisceau incident ($F_I$), le dispositif d'amplification (10) comprenant une deuxième unité optique de renvoi (30) propre à renvoyer le deuxième faisceau utile ($F_{U2}$) dans le milieu amplificateur (M) pour au moins un troisième, puis un quatrième passage de sorte que le dernier faisceau utile en sortie du milieu amplificateur (M), dit faisceau de sortie ($F_S$), ait un diamètre sensiblement égal au diamètre ($\Phi$) du faisceau incident ($F_I$) et que les sous-faisceaux de chaque longueur d'onde, formant ledit faisceau de sortie ($F_S$), soient parallèles entre eux.

6. Dispositif d'amplification (10) selon la revendication 5, dans lequel la deuxième unité optique de renvoi (30) est configurée de sorte que le faisceau de sortie ($F_S$) est équivalent en termes de diamètre et de dispersion spatiale chromatique au faisceau qui aurait été obtenu suite au passage successif d'un faisceau incident dans une première, puis une deuxième lame à faces planes et parallèles, la première lame étant orientée de sorte que le faisceau incident arrive sur la face avant de la première lame avec un premier angle d'incidence ($\Theta_1$) égal à l'angle incidence ($\Theta$) du faisceau incident sur le milieu amplificateur (M), la deuxième lame étant orientée de sorte à recevoir le faisceau en sortie de la première lame avec un deuxième angle d'incidence ($\Theta_2$) égal à l'opposé du premier angle d'incidence ($\Theta_1$).

7. Dispositif d'amplification (10) selon la revendication 5 ou 6, dans lequel la deuxième unité optique de renvoi (30) est propre à renvoyer le deuxième faisceau utile ($F_{U2}$) dans le milieu amplificateur (M) de sorte que le nombre total de passages du faisceau à amplifier dans le milieu amplificateur (M) soit un multiple de quatre.

8. Dispositif d'amplification (10) selon l'une quelconque des revendications 5 à 7, dans lequel la deuxième unité optique de renvoi (30) est propre à renvoyer le deuxième faisceau utile ($F_{U2}$) dans le milieu amplificateur (M) de sorte que le nombre total de passages du faisceau à amplifier dans le milieu amplificateur (M) soit un multiple de deux et que le faisceau à amplifier effectue un trajet aller et un trajet retour, superposé au trajet aller, entre la première entrée dudit faisceau dans le milieu amplificateur (M) et la dernière sortie dudit faisceau du milieu amplificateur (M).

9. Dispositif d'amplification (10) selon l'une quelconque des revendications 5 à 8, dans lequel à chaque passage dans le milieu amplificateur (M), il est obtenu un faisceau parasite directement réfléchi sur la face avant (20) du milieu amplificateur (M), la première unité de renvoi (18) et la deuxième unité de renvoi (30) étant disposées en dehors du trajet de chaque faisceau parasite résultant d'un passage impair du faisceau à amplifier dans le milieu amplificateur (M).

10. Dispositif d'amplification (10) selon l'une quelconque des revendications 1 à 9, dans lequel le dernier faisceau utile en sortie du milieu amplificateur (M) est dit faisceau de sortie ($F_S$), le faisceau incident ($F_I$) et le faisceau de sortie ($F_S$) étant décalés spatialement.

**Patentansprüche**

1. Vorrichtung (10) zum Verstärken eines Laserstrahls mehrerer Wellenlängen, die Vorrichtung (10) umfassend:

   a. ein festes Verstärkermedium (M), das mindestens zwei ebenen Flächen aufweist, von: einer vorderen Fläche (20), die geeignet ist, um den zu verstärkenden Strahl bei jedem Durchgang des Strahls durch das Verstärkermedium (M) aufzunehmen, und eine reflektierende hintere Fläche (22), wobei die vordere Fläche (20) in Bezug auf die hintere Fläche (22) um eine Neigung ($\beta$) ungleich Null geneigt ist, die hintere Fläche (22) geeignet ist, gekühlt zu werden, wobei der bei dem ersten Durchgang auf der vorderen Fläche (20) empfangene Strahl als einfallender Strahl ($F_I$) bezeichnet wird, der von der hinteren Fläche (22) reflektierte und von der vorderen Fläche (20) gebrochene Strahl bei dem n-ten Durchgang als n-ter Nutzstrahl ($F_{Un}$) bezeichnet wird, und
   b. eine erste optische Umlenkeinheit (18), die im Strahlengang des ersten Nutzstrahls ($F_{U1}$) angeordnet ist, wobei die erste optische Umlenkeinheit (18) konfiguriert ist, um den ersten Nutzstrahl ($F_{U1}$) für einen zweiten Durchgang durch das Verstärkermedium (M) auf die vordere Fläche (20) umzulenken, sodass die Teilstrahlen jeder Wellenlänge, die den zweiten Nutzstrahl ($F_{U2}$) bilden, an dem Ende des zweiten Durchgangs parallel zueinander sind.

2. Verstärkervorrichtung (10) nach Anspruch 1, wobei die erste optische Umlenkeinheit (18) konfiguriert ist, sodass der zweite Nutzstrahl ($F_{U2}$) hinsichtlich der chromatischen räumlichen Dispersion dem Strahl entspricht, der an dem Ausgang einer Platte mit ebenen und parallelen Flächen aus einem einfallenden Strahl erlangt worden wäre, der auf die vordere Fläche der Platte mit einem Einfallswinkel auftrifft, der gleich wie der Einfallswinkel ($\Theta$) des einfallenden Strahls ($F_I$) auf das Verstärkermedium (M) ist.

3. Verstärkervorrichtung (10) nach Anspruch 1 oder 2, wobei das Verstärkermedium (M) eine Scheibe ist, deren ebene Flächen die vordere Fläche (20) und die hintere Fläche (22) sind, wobei die Flächen (20, 22) in ein gerades Prisma mit dreieckiger oder trapezförmiger Grundfläche, der sogenannten Basis (24), einbeschrieben sind, die erste optische Umlenkeinheit (18) umfassend zwei Spiegel (M1, M2), die ausgerichtet sind, sodass der Weg des ersten Nutzstrahls ($F_{U1}$) zwischen dem verstärkenden Medium (M) und dem ersten Spiegel (M1) in Bezug auf eine Symmetrieebene ($P_H$) symmetrisch zu dem Weg des ersten Nutzstrahls ($F_{U1}$) zwischen dem zweiten Spiegel (M2) und dem verstärkenden Medium (M) ist, wobei die Symmetrieebene ($P_H$) eine senkrechte Ebene ist, einerseits zu einer Ebene ($P_{24}$), die die Basis (24) des Verstärkermediums (M) enthält, und andererseits zu einer Ebene ($P_{22}$), die die hintere Fläche (22) enthält.

4. Verstärkervorrichtung (10) nach einem der Ansprüche 1 bis 3, wobei die vordere Fläche (20) des Verstärkermediums (M) geeignet ist, um den einfallenden Strahl ($F_I$) zu empfangen und einen Strahl, den sogenannten ersten Störstrahl ($F_{P1}$), ausgehend von dem einfallenden Strahl ($F_I$) zu reflektieren, wobei die erste optische Umlenkeinheit (18) außerhalb des Weges des ersten Störstrahls ($F_{P1}$) angeordnet ist.

5. Verstärkervorrichtung (10) nach einem der Ansprüche 1 bis 4, wobei der zweite Nutzstrahl ($F_{U2}$) einen erweiterten Durchmesser ($\Phi + \Delta\Phi$) in Bezug auf den Durchmesser ($\Phi$) des einfallenden Strahls ($F_I$) aufweist, die Verstärkervorrichtung (10) umfassend eine zweite optische Umlenkeinheit (30), die geeignet ist, um den zweiten Nutzstrahl ($F_{U2}$) in das Verstärkermedium (M) für mindestens einen dritten und dann einen vierten Durchgang zurückzulenken, sodass der letzte Nutzstrahl an dem Ausgang des Verstärkermediums (M), der so genannte Ausgangsstrahl ($F_S$), einen Durchmesser aufweist, der im Wesentlichen gleich wie der Durchmesser ($\Phi$) des einfallenden Strahls ($F_I$) ist, und dass die Teilstrahlen jeder Wellenlänge, die den Ausgangsstrahl ($F_S$) bilden, parallel zueinander sind.

6. Verstärkervorrichtung (10) nach Anspruch 5, wobei die zweite optische Umlenkeinheit (30) konfiguriert ist, sodass der Ausgangsstrahl ($F_S$) hinsichtlich des Durchmessers und der chromatischen räumlichen Dispersion dem Strahl entspricht, der infolge des aufeinanderfolgenden Durchlaufs eines einfallenden Strahls durch eine erste und dann eine zweite Platte mit ebenen und parallelen Flächen erlangt worden wäre, wobei die erste Klinge so ausgerichtet ist, dass der einfallende Strahl auf die vordere Fläche der ersten Platte mit einem ersten Einfallswinkel ($\Theta_1$) auftrifft, der gleich wie der Einfallswinkel ($\Theta$) des einfallenden Strahls auf das Verstärkermedium (M) ist, wobei die zweite Platte ausgerichtet ist, um den aus der ersten Platte austretenden Strahl mit einem zweiten Einfallswinkel ($\Theta_2$) zu empfangen, der gleich wie das Gegenteil des ersten Einfallswinkels ($\Theta_1$) ist.

7. Verstärkervorrichtung (10) nach Anspruch 5 oder 6, wobei die zweite optische Umlenkeinheit (30) geeignet ist, um den zweiten Nutzstrahl ($F_{U2}$) in das Verstärkermedium (M) zurückzulenken, sodass die Gesamtzahl der Durchgänge des zu verstärkenden Strahls durch das Verstärkermedium (M) ein Vielfaches von vier ist.

8. Verstärkervorrichtung (10) nach einem der Ansprüche 5 bis 7, wobei die zweite optische Umlenkeinheit (30) geeignet ist, um den zweiten Nutzstrahl ($F_{U2}$) in das Verstärkermedium (M) zurückzusenden, sodass die Gesamtzahl der Durchgänge des zu verstärkenden Strahls in dem Verstärkermedium (M) ein Vielfaches von zwei ist und dass der zu verstärkende Strahl einen Hinweg und einen dem Hinweg überlagerten Rückweg zwischen dem ersten Eintritt des Strahls in das Verstärkermedium (M) und dem letzten Austritt des Strahls aus dem Verstärkermedium (M) zurücklegt.

9. Verstärkervorrichtung (10) nach einem der Ansprüche 5 bis 8, wobei bei jedem Durchgang durch das Verstärkermedium (M) ein Störstrahl erlangt wird, der direkt an der vorderen Fläche (20) des Verstärkermediums (M) reflektiert wird, wobei die erste Umlenkeinheit (18) und die zweite Umlenkeinheit (30) außerhalb des Wegs von jedem Störstrahl angeordnet sind, der aus einem ungeraden Durchgang des zu verstärkenden Strahls durch das Verstärkermedium (M) resultiert.

10. Verstärkervorrichtung (10) nach einem der Ansprüche 1 bis 9, wobei der letzte Nutzstrahl an dem Ausgang des Verstärkermediums (M) als Ausgangsstrahl ($F_S$) bezeichnet wird, wobei der einfallende Strahl ($F_I$) und der Ausgangsstrahl ($F_S$) räumlich verschoben sind.

**Claims**

1. A device (10) for amplifying a multi-wavelength laser beam, the device (10) comprising:

   a. a solid active laser medium (M) having at least two plane faces among: a front face (20) suitable for receiving the beam to be amplified each time said beam passes through the active laser medium (M), and a reflecting rear face (22), the front face (20) being inclined with respect to the rear face (22) at a non-zero inclination ($\beta$), the rear face (22) being suitable for being cooled, the beam received on the front face (20) during the first pass being called the incident beam ($F_I$), the beam reflected by the rear face (22) and refracted by the front face (20) during the nth pass being called the nth useful beam ($F_{Un}$), and
   b. a first optical return unit (18) arranged along the path of the first useful beam ($F_{U1}$), the first optical return unit (18) being configured for returning the first useful beam ($F_{U1}$) to the front face (20) for a second pass through the active laser medium (M) so that the sub-beams of each wavelength, forming the second useful beam ($F_{U2}$), are parallel to each other at the end of the second pass.

2. The amplification device (10) according to claim 1, wherein the first optical return unit (18) is configured in such a way that the second useful beam ($F_{U2}$) is equivalent in terms of chromatic spatial dispersion to the beam which would have been obtained at the exit of a plate with plane and parallel faces from an incident beam arriving on the front face of said plate at an angle of incidence equal to the angle of incidence ($\Theta$) of the incident beam ($F_I$) on the active laser medium (M).

3. The amplification device (10) according to claim 1 or 2, wherein the active laser medium (M) is a disc the plane faces of which are the front face (20) and the rear face (22), said faces (20, 22) being inscribed in a right prism with a triangular or trapezoidal base, called the base (24), the first optical return unit (18) comprising two mirrors (M1, M2) oriented so that the path of the first useful beam ($F_{U1}$) between the active laser medium (M) and the first mirror (M1) is symmetrical, with respect to a plane of symmetry ($P_H$), to the path of the first useful beam ($F_{U1}$) between the second mirror (M2) and the active laser medium (M), the plane of symmetry ($P_H$) being a plane perpendicular to a plane ($P_{24}$) containing the base (24) of the active laser medium (M) and, to a plane ($P_{22}$) containing the rear face (22).

4. The amplification device (10) according to any of claims 1 to 3, wherein the front face (20) of the active laser medium (M) is suitable for receiving the incident beam ($F_I$) and for reflecting a beam, called the first spurious beam ($F_{P1}$), from the incident beam ($F_I$), the first optical return unit (18) being arranged outside the path of the first spurious beam ($F_{P1}$).

5. The amplification device (10) according to any of claims 1 to 4, wherein the second useful beam ($F_{U2}$) has an enlarged diameter ($\Phi + \Delta\Phi$) compared to the diameter ($\Phi$) of the incident beam ($F_I$), the amplification device (10) comprising a second optical return unit (30) suitable for returning the second useful beam ($F_{U2}$) into the active laser medium (M) for at least a third, then a fourth pass, so that the last useful beam at the output of the active laser medium (M), called the output beam ($F_S$), has a diameter substantially equal to the diameter ($\Phi$) of the incident beam ($F_I$) and the sub-beams of each wavelength, forming said output beam ($F_S$), are parallel to one another.

6. The amplification device (10) according to claim 5, wherein the second optical return unit (30) is configured such that the output beam ($F_S$) is equivalent in terms of diameter and chromatic spatial dispersion to the beam which would have been obtained following the successive pass of an incident beam through a first and then a second plate with plane and parallel faces, the first plate being oriented so that the incident beam arrives on the front face of the first plate at a first angle of incidence ($\Theta_1$) equal to the angle of incidence ($\Theta$) of the incident beam on the active laser medium (M), the second plate being oriented so as to receive the beam at the output of the first plate at a second angle of incidence ($\Theta_2$) equal to the opposite of the first angle of incidence ($\Theta_1$).

7. The amplification device (10) according to claim 5 or 6, wherein the second optical return unit (30) is suitable for returning the second useful beam ($F_{U2}$) through the active laser medium (M) so that the total number of passes of the beam to be amplified through the active laser medium (M) is a multiple of four.

8. The amplification device (10) according to any of Claims 5 to 7, wherein the second optical return unit (30) is suitable for returning the second useful beam ($F_{U2}$) through the active laser medium (M) so that the total number of passes of the beam to be amplified through the active laser medium (M) is a multiple of two and the beam to be amplified travels an outward path and a return path, superimposed on the outward path, between the first input of said beam into the active laser medium (M) and the last output of said beam from the active laser medium (M).

9. The amplification device (10) according to any of claims 5 to 8, wherein, at each pass through the active laser medium (M), a spurious beam is obtained, which is directly reflected on the front face (20) of the active laser medium (M), the first return unit (18) and the second return unit (30) being arranged outside the path of each spurious beam resulting from an odd pass of the beam to be amplified through the active laser medium (M).

10. The amplification device (10) according to any of claims 1 to 9, wherein the last useful beam at the output of the active laser medium (M) is called the output beam ($F_S$), the incident beam ($F_I$) and the output beam ($F_S$) being spatially shifted.

## FIG.1

FIG.2

$$F_S = F_{u4}$$

$$2(\theta_X + \beta \cdot (n-1))$$

$$2\theta_X$$

FIG.3

EP 4 264 752 B1

# FIG.4

EP 4 264 752 B1

FIG.5

EP 4 264 752 B1

**EP 4 264 752 B1**

**RÉFÉRENCES CITÉES DANS LA DESCRIPTION**

**Documents brevets cités dans la description**

- EP 2915226 A